# EUROPEAN PATENT APPLICATION

(11) **EP 4 362 565 A1**
(43) Date of publication of application: **01.05.2024**
(21) Application number: 23182662.9
(22) Date of filing: 30.06.2023
(51) Int. Cl.: H04W 56/00, H04W 64/00, H04W 84/12

(54) **ENHANCED FTM PROTOCOL TO TRANSPORT TIME SYNCHRONIZATION INFORMATION**

(30) Priority: 28.10.2022 US 202263420341 P
(71) Applicant: INTEL Corporation, Santa Clara, CA 95054 (US)
(72) Inventor: CAVALCANTI, Dave, Portland, 97229 (US); CORDEIRO, Carlos, Camas, 98607 (US); DAS, Dibakar, Hillsboro, 97123 (US); PEREZ-RAMIREZ, Javier, North Plains, 97133 (US); SEGEV, Yonathan, Sunnyvale, 94087 (US); SUDHAKARAN, Susruth, Portland, 97229 (US); VENKATESAN, Ganesh, Hillsboro, 97124 (US)
(74) Representative: Viering, Jentschura & Partner mbB Patent- und Rechtsanwälte

(57) **Abstract**

This disclosure describes systems, methods, and devices related to enhanced FTM protocol. A device may establish a 802. IAS-based time synchronization. The device may enable a transfer of the 802.1AS follow up information within the 802.11az trigger-based FTM procedure.

## Description

### TECHNICAL FIELD

This disclosure generally relates to systems and methods for wireless communications and, more particularly, to enhanced to fine timing measurement (FTM) protocol to transport time synchronization information.

### BACKGROUND

Wireless devices are becoming widely prevalent and are increasingly requesting access to wireless channels. The Institute of Electrical and Electronics Engineers (IEEE) is developing one or more standards that utilize Orthogonal Frequency-Division Multiple Access (OFDMA) in channel allocation.

### BRIEF DESCRIPTION OF THE DRAWINGS

FIG. 1 is a network diagram illustrating an example network environment for enhanced FTM protocol, in accordance with one or more example embodiments of the present disclosure.
FIGs. 2-9 depict various illustrative schematic diagrams for enhanced FTM protocol, in accordance with one or more example embodiments of the present disclosure.

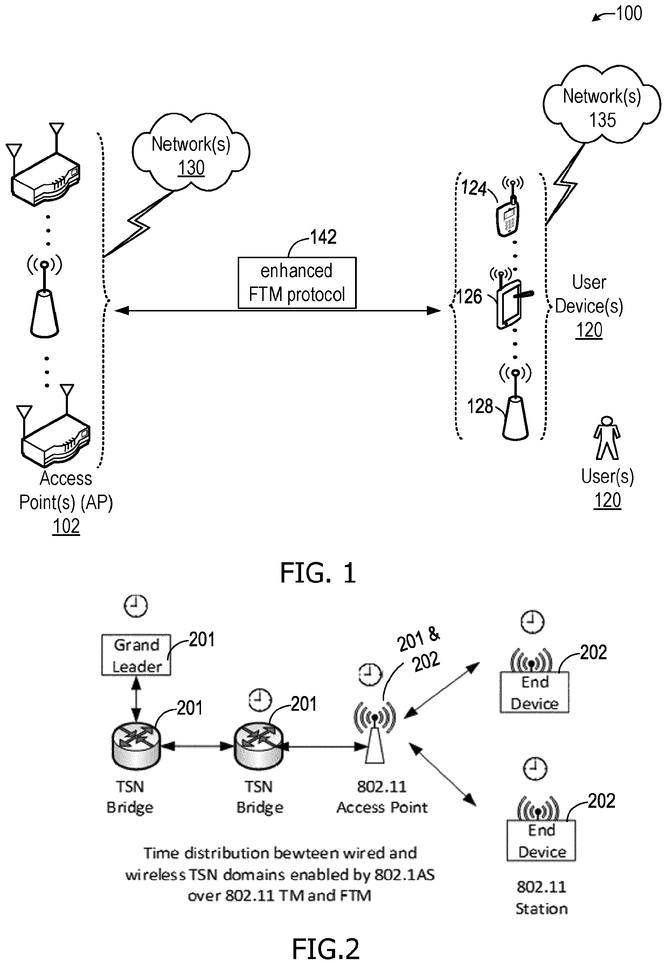

FIG. 2 shows an exemplary illustration of a Wired-Wireless TSN Architecture and time synchronization based on 802.1AS.

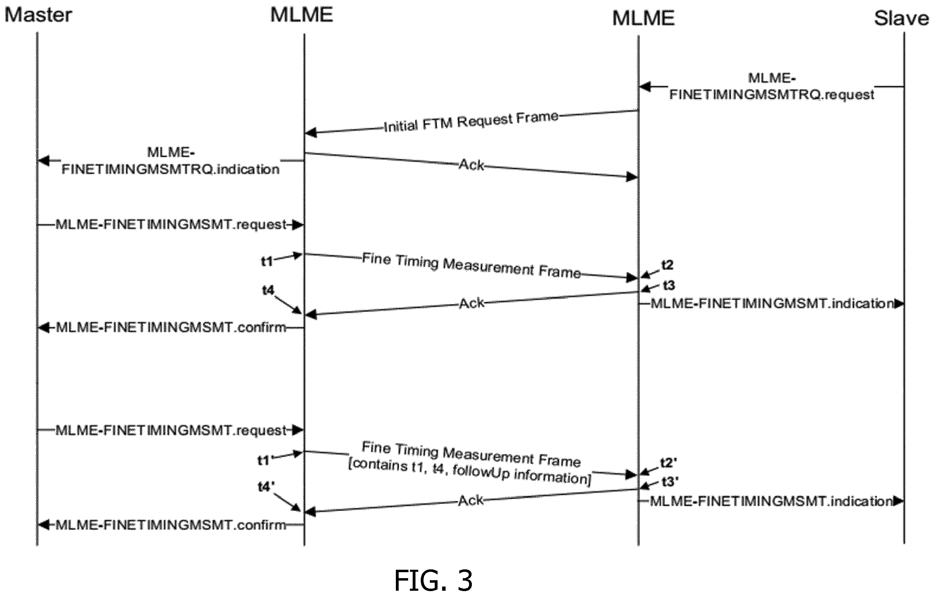

FIG. 3 shows an exemplary illustration of an FTM procedure supporting 802.1AS time synchronization.

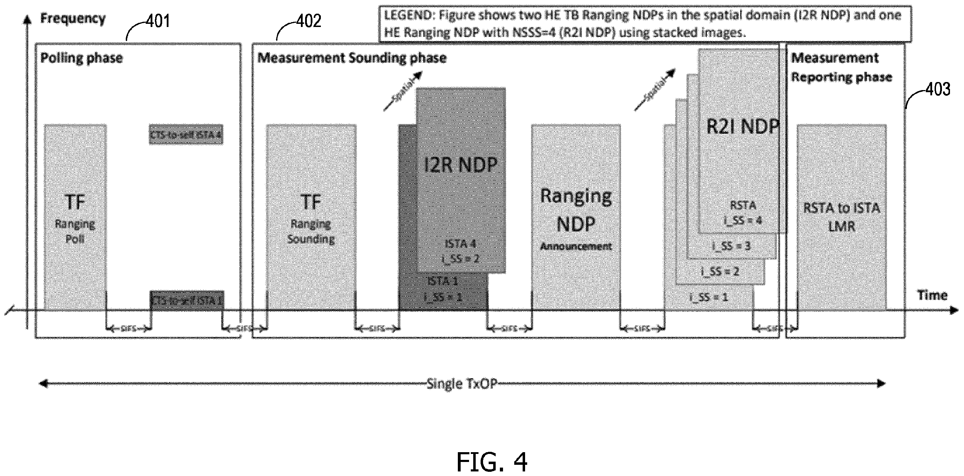

FIG. 4 shows an exemplary illustration of an 802.11az trigger-based FTM procedure.

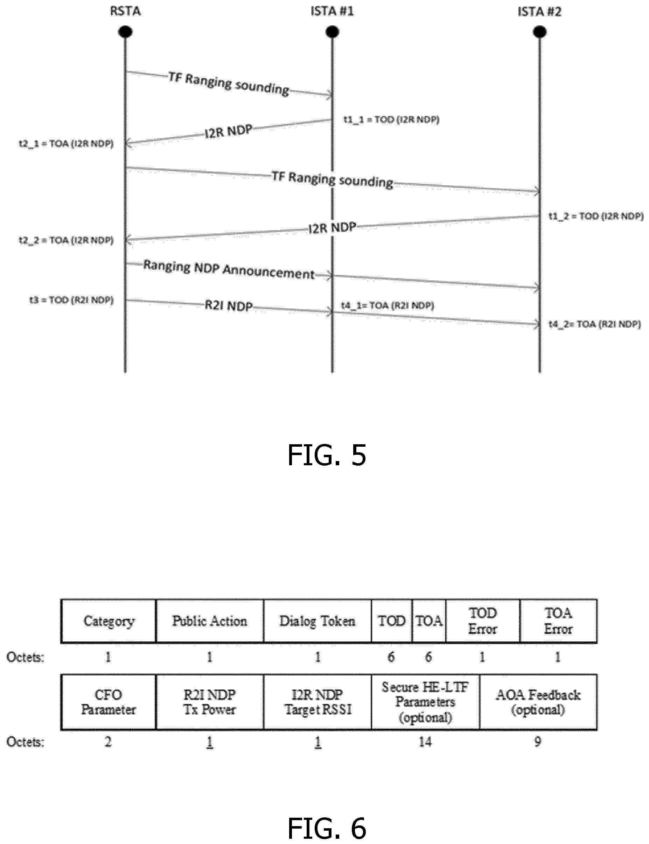

FIG. 5 shows an exemplary illustration of Time stamping (11, t2, t3, and t4) within the 11az trigger-based FTM.
FIG. 6 shows an exemplary illustration of a Location Measurement Report (LMR) frame.

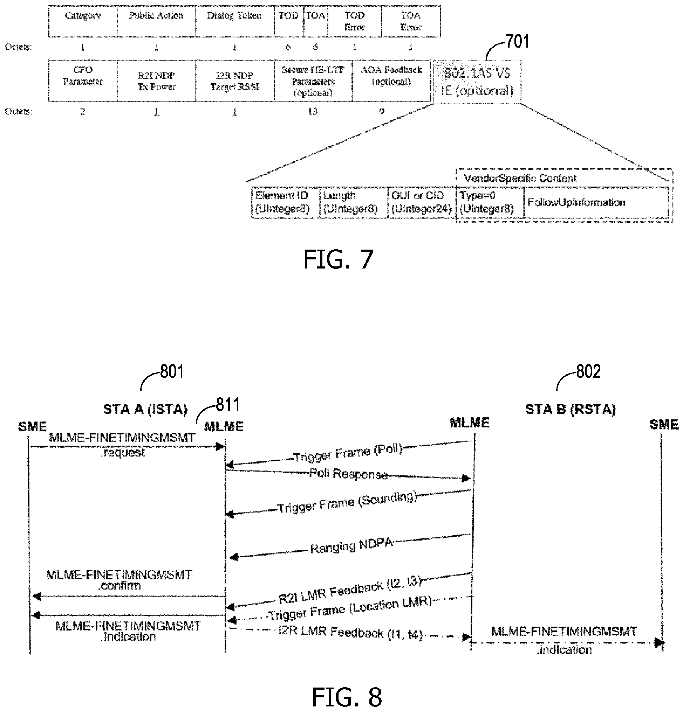

FIG. 7 shows an exemplary illustration of a LMR frame in the reporting phase of the 802.11az FTM procedure.
FIG. 8 shows an exemplary illustration of FTM primitives and timestamp reporting capture for TB ranging measurement exchange (#3451).

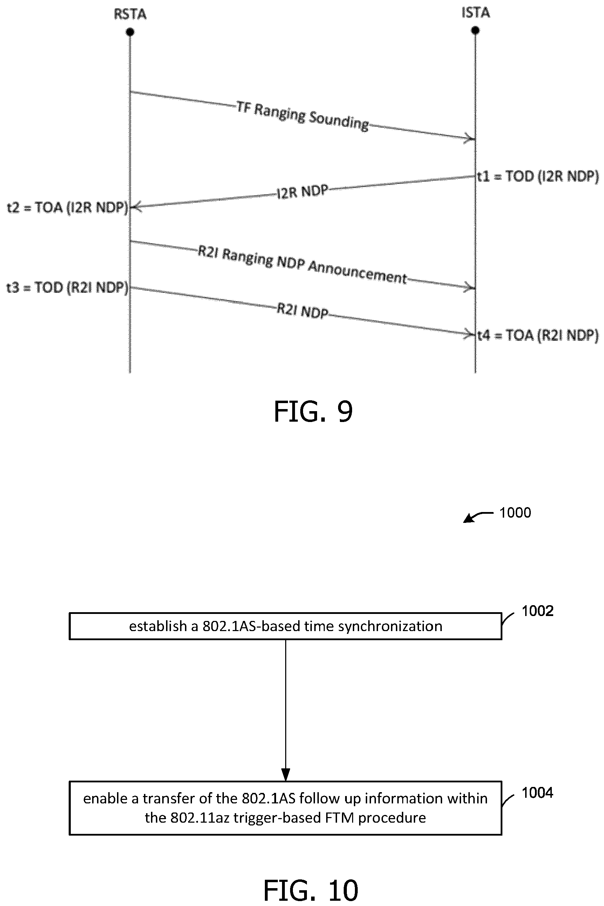

FIG. 9 shows an exemplary illustration of a timing diagram of a measurement sounding phase in TB ranging.
FIG. 10 illustrates a flow diagram of illustrative process for an illustrative enhanced FTM protocol system, in accordance with one or more example embodiments of the present disclosure.

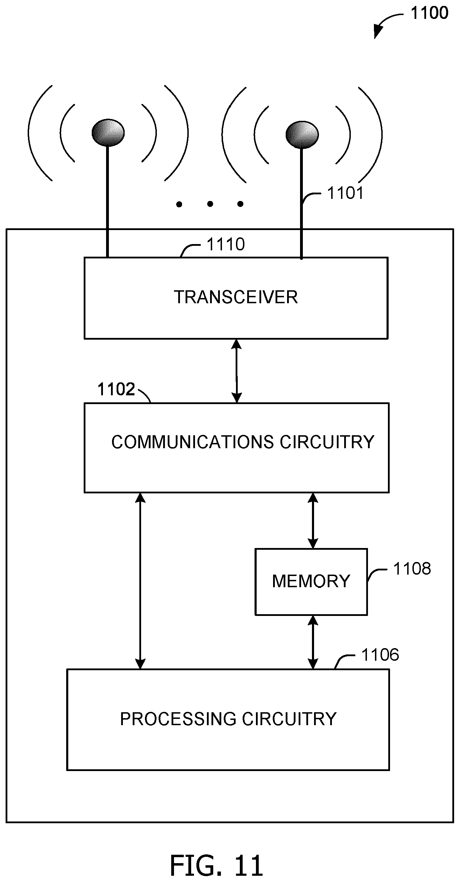

FIG. 11 illustrates a functional diagram of an exemplary communication station that may be suitable for use as a user device, in accordance with one or more example embodiments of the present disclosure.

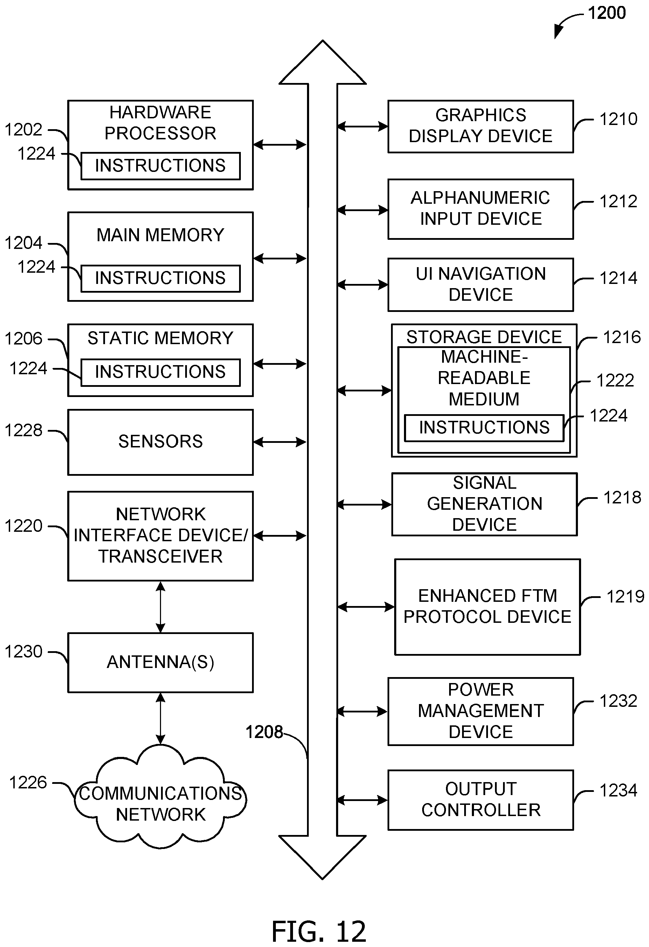

FIG. 12 illustrates a block diagram of an example machine upon which any of one or more techniques (e.g., methods) may be performed, in accordance with one or more example embodiments of the present disclosure.

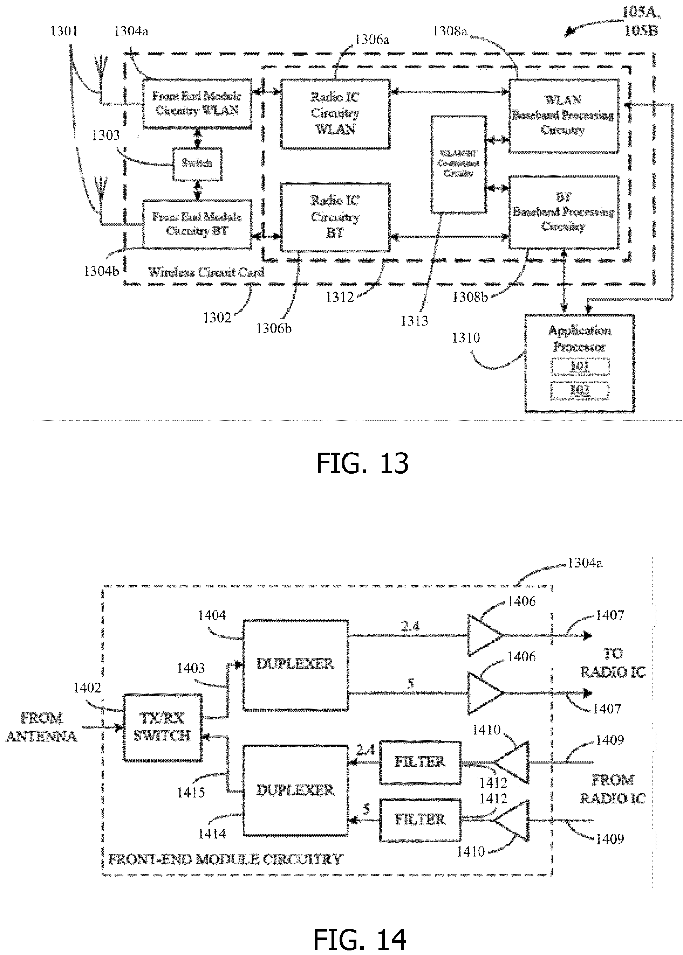

FIG. 13 is a block diagram of a radio architecture in accordance with some examples.
FIG. 14 illustrates an example front-end module circuitry for use in the radio architecture of FIG. 13, in accordance with one or more example embodiments of the present disclosure.

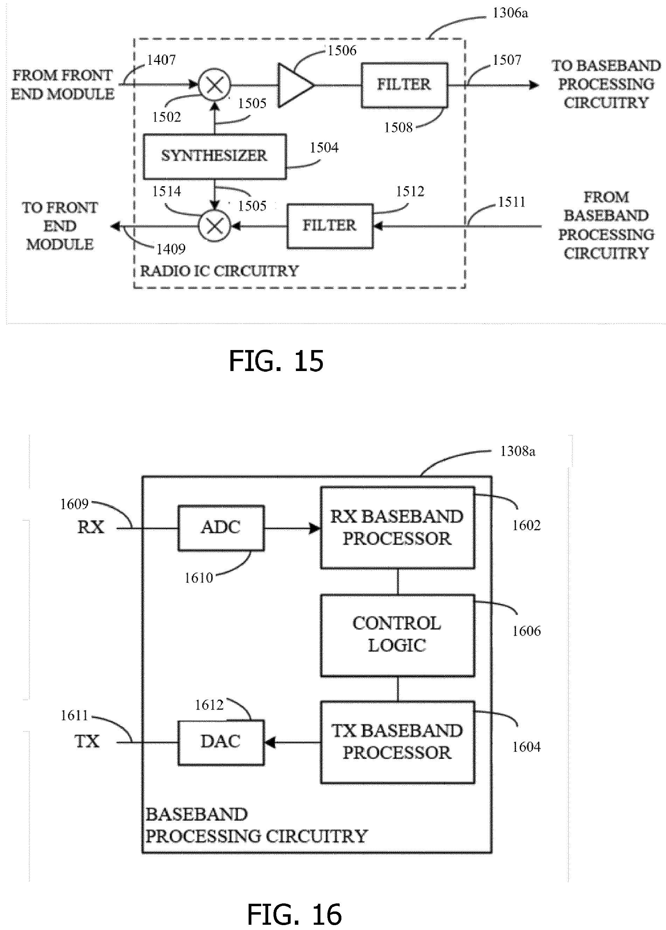

FIG. 15 illustrates an example radio IC circuitry for use in the radio architecture of FIG. 13, in accordance with one or more example embodiments of the present disclosure.
FIG. 16 illustrates an example baseband processing circuitry for use in the radio architecture of FIG. 13, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

It should be understood that very high throughput (VHT) null data packet (NDP) Sounding-based 802.11az protocol is referred to as VHTz and high efficiency (HE) null data packet (NDP) Sounding-based 802.11az protocol is referred to as HEz. Basically, VHTz is based on the 802.11ac NDP and is a single user sequence; HEz is based on 802.11ax NDP and 802.11az NDP and it is a multiuser sequence.

Though as described using 802.11az trigger based (TB) fine timing measurement (FTM) is advantageous to 802.1AS, changes are required in the current 802.11az reporting mechanism. In the enhanced distributed channel access (EDCA) FTM procedure defined to support 802.1AS, FTM frames are used for negotiation, measurement exchange and measurement reporting.

Example embodiments of the present disclosure relate to systems, methods, and devices for enhancements to 802.11az FTM protocol to transport 802.1AS-based time synchronization information.

In one embodiment, an enhanced FTM protocol system may define a method to enhance 802.11az to support 802.1AS-based time synchronization by enabling the transfer of the 802.1AS follow up information within the 802.11az trigger-based FTM procedure. The enhanced FTM protocol system facilitates an extension to the 802.11az Location Measurement Report (LMR) report frame to include the 802.1AS Vendor Specific IE that carries the follow up information. The 802.1AS follow up information is required to enable end-to-end link-independent timing information to be exchanged across the network. The enhanced FTM protocol system facilitates a means for the requester to indicate the purpose for the FTM Session establishment as a time sensitive networks (TSN)-based Time Synchronization by that indicating to the RSTA (Responding STA) the need to include the TSN (802.1AS) information in the measurement reporting.

The solution enhances the scalability of the 802.1AS time synchronization mechanism in 802.11/Wi-Fi networks. 802.11az FTM enables the Wi-Fi TSN network to support a larger number of STAs with smaller overhead. Wi-Fi TSN-capable networks can also take advantage of 802.11az enhanced security options and deterministic (scheduled) FTM operation, which simplifies the overall TSN resource allocation process.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

FIG. 1 is a network diagram illustrating an example network environment of enhanced FTM protocol, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

In some embodiments, the user devices 120 and the AP 102 may include one or more computer systems similar to that of the functional diagram of FIG. 11 and/or the example machine/system of FIG. 12.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (HMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any obj ect (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax), or 60 GHZ channels (e.g. 802.11ad, 802.11ay, 802.11az). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, AP 102 may facilitate enhanced FTM protocol 142 with one or more user devices 120.

It is understood that the above descriptions are for purposes of illustration and are not meant to be limiting.

FIGs. 2-9 depict illustrative schematic diagrams for enhanced FTM protocol, in accordance with one or more example embodiments of the present disclosure.

The IEEE 802.1 TSN standards comprise of several mechanisms to achieve deterministic latency bounds with high reliability in Local Area Networks (LAN). The IEEE 802.1AS protocol is used to enable time synchronization across the network, which is a core TSN feature, which is also used to enable time-aware scheduling of resources according to the 802.1Qbv standard. It is implemented and demonstrated 802.1AS based time synchronization across Ethernet 201 and Wi-Fi devices 202 as shown in FIG. 2. 802.1AS is supported over the 802.11 links by the TM and FTM protocols as defined in the 802.11-2020 standard. The FTM procedure is used to estimate the link delay between 802.11 devices 202 by capturing the timestamps of FTM frame exchanges between a pair of devices (e.g., client and AP) as shown in FIG. 3.

Within a TSN domain, which may be a sub-set of a broader network, all wired (Ethernet) ports 201 and wireless (802.11) devices 202 must be synchronized to the same reference clock using the 802.1AS protocol. Typically, the reference clock is a node in the wired side of the network and time is transferred (using time offsets calculated along the path) via the 802.1AS protocol, but other configurations are also possible. A FTM session as exemplarily outlined in FIG. 3 must be established and periodically executed between 802.11 devices (e.g., AP and each STA in the BSS) to maintain accurate time synchronization with the reference clock. In legacy (REVmc based) FTM, each FTM action frame involves the 802.11 channel procedure (based on enhanced distributed channel access (EDCA)) and related overheads in addition to the over the air transmission overhead. As the number of STAs in the BSS increases, the overhead increases, reducing the air-time resources available for time-sensitive data transmissions.

The 802.11az amendment defines improvements to the legacy FTM protocol. The 802.11az protocol but brings several important advantages:
- Encryption and authentication of negotiation and measurement results.
- Substantially improved spectral efficiency.
- Substantially improved power efficiency.
- Support for shorter latency and greater determinism.

The 802.11az FTM procedure, illustrated in Figure FIG. 4, is divided in three phases: polling 401, measurement sounding 402, and measurement reporting 403 phases. The time stamps required for 802.1AS time synchronization are obtained during the measurement sounding phase 402, which is exemplarily illustrated in FIG. 5. The time stamps t2 and t3 are reported to the ISTA (initiating STA) during the reporting phase (within the LMR frame), so that the STAs can calculate the link delay, estimate, and correct the time offset w.r.t. the reference clock.

For measurement reporting purposes the following FTM frame includes the measurement results t1, t4 and the follow up information (encoded as a vendor specific Information Element defined in the 802.1AS-2020 standard). The follow up information represents the accumulated time offset along the path and it is passed down from the 802.1AS layer, transparently, to be inserted in the FTM frames. This accumulated time offset along the path information is missing from the 802.11az reporting phase, which defines fields in the LMR frame to report the time stamps required for computing the link delay and offset across the 802.11 link, but it doesn't include a field to report the follow up information (802.1AS vendor specific IE). An exemplary LMR frame is provided illustratively in FIG. 6.

In one or more embodiments, an enhanced FTM protocol system may define a new (optional) information element to be included in the LMR frame exchanged in the reporting phase of the 802.11az FTM procedure as illustrated in FIG. 7 below. The LMR frame may include a field, in which the 802.1AS VendorSpecific Information Element 701 can be used as defined in 802.1AS-2020 and may include preciseOriginTimestamp, rateRatio, correctionField, and other fields of the Follow-Up message defined in 802.1AS. The illustrated format of VendorSpecific information element 701 is for when Type=0.

The 802.11 devices shall include the 802.1AS VS IE 701 in the LMR frame when the 802.11az FTM procedure is used to support time synchronization.

The FTM TB negotiation is modified as well to include an Intent field indicating the purpose of the FTM procedure. A 802.1AS capable Station (STA) negotiating an FTM procedure will indicate the inclusion of 802.1AS information and purpose of the FTM session establishment for the purpose of TSN.

The Request Type/Status Indication field reuses the Status Indication field that is reserved in the Ranging Parameters element when included in the FTM Request, to provide an indication that the FTM session is setup for the purpose of TSN and that the following LMR frames required to carry the 802.1AZ IE.

| | B0 B1 | B2 B6 | B7 | B8 B9 | B10 B11 | B12 | B13 | B14 | B15 |
|---|---|---|---|---|---|---|---|---|---|
| | Request Type/ Status Indication | Value | I2R LMR Feedb ack | Reserved | Ranging Priority | R2I TOA Type | I2R TOA Type | R2I AOA Request | I2R AOA Request |
| Bits: | 2 | 5 | 1 | 2 | 2 | 1 | 1 | 1 | 1 |

| | B16 B21 | B22 | B23 | B24 B26 | B27 B29 | B30 B31 | B32 B34 | B35 B37 |
|---|---|---|---|---|---|---|---|---|
| | Format and Bandwidth | Immediate R21 Feedback | Immediate I2R Feedback | Max I2R Repetition | Max R2I Repetition | Reserved | Max R2I STS ≤ 80 MHz | Max R2I STS > 80 MHz |
| Bits: | 6 | 1 | 1 | 3 | 3 | 2 | 3 | 3 |

| | B38 B39 | B40 B41 | B42 B44 | B45 B47 | B48 B55 |
|---|---|---|---|---|---|
| | Max R2I LTF Total | Max I2R LTF Total | Max I2R STS ≤ 80 MHz | Max I2R STS > 80 MHz | BSS Color Information |
| Bits: | 2 | 2 | 3 | 3 | 8 |

When the Ranging Parameters element is included in a FTM Request, The Request Type/Status Indication field shall indicate the purpose of the negotiation (e.g. Range measurement, Location measurement, 802.1AS TSN). In the FTM Response frame the Request Type/Status Indication field shall indicate the result (already exists in the standard refer to table 9-278 in 802.11-2020).

Request type subfield values:

| Value | Description |
|---|---|
| 0 | Range/Proximity measurement |
| 1 | Time Synchronization |
| 2 | Simultaneous Range and Time Synchronization |
| 3 | Reserved |

The 802.1AS higher layer shall use the MLME FTM primitives as in the EDCA FTM case, but an updated set of FTM parameters shall be used to configure the 802.1 1az FTM mode (e.g. TB Ranging), which may include Ranging Parameters or a sub-set of the Ranging Parameters as defined in the 802.11az specification.

The 802.1AS higher layer at each client (or Initiating STA 801) uses the MLME-FINETIMINGMSMT.request 811 primitive to initiate the FTM-based time synchronization and obtain the time stamping information required to compute the link delay and time offset relative to the leader STA (e.g., AP or Responding STA 802). When using 802.11az FTM mode, the FTM request primitive enables the ISTA 801 to participate in the TB ranging measurement exchange as illustrated in FIG. 8 illustrating exemplary FTM primitives and timestamp reporting capture for TB ranging measurement exchange (#3451).

The initiation of the 11az FTM procedure shall be aligned with the 802.1AS sync interval, as defined in the 802.1AS standard clause 10.7.2. In the EDCA FTM procedure, each initiating STA may start the FTM procedure independently, as it is a peer-to-peer exchange with the responding STA. However, when the 802.11az FTM mode is used, it is beneficial to align the sync intervals across clients within the BSS as much as possible, so the overhead can be minimized by taking advantage of the OFDMA and MU MIMO capabilities. To enable such alignment, the ISTA availability window shall be configured based on the 802.1AS sync interval.

In one embodiment, the ISTA availability window parameters may be provided at the MLME FTM interface to the 802.1AS higher layer for configuration. In another embodiment, a new mapping between the 802.1AS sync interval (currentLogSyncInterval) and the 11az FTM ISTA availability window parameters may be defined where the start time and duration of the availability window are aligned with the 802.1AS sync interval and expected duration of the FTM message exchange.

In another embodiment, a higher layer time-synchronization configuration applications (e.g. the central network configuration - CNC entity defined in an TSN-capable network) may configure the 802.1AS layer across all devices in the WLAN to ensure the 11az FTM ISTA availability windows are aligned to maximize the efficiency of the 11az TB ranging protocol for time synchronization. A new configuration message with the 802.1AS sync interval and 11az FTM ISTA availability window parameters may be defined and sent from the CNC to the end device (e.g. ISTA). In another embodiment, the AP may announce the availability windows that the ISTAs shall use when 11az TB FTM is used for time synchronization.

When using the 11az FTM in TB mode, the ISTA and RSTA will compute the t1, t2, t3, and t4 timestamps as illustrated in FIG. 9 exemplarily illustrating a timing diagram of a measurement sounding phase in TB ranging. It should be noted that t1 and t4 are available to the ISTA in this mode, therefore the t2 and t3 time stamps are provided to the ISTA in the R2I LMR feedback with the 801.AS follow up information as described previously.

It is understood that the above descriptions are for purposes of illustration and are not meant to be limiting.

FIG. 10 illustrates a flow diagram of illustrative process 1000 for an enhanced FTM protocol system, in accordance with one or more example embodiments of the present disclosure.

At block 1002, a device (e.g., the user device(s) 120 and/or the AP 102 of FIG. 1 and/or the enhanced FTM protocol device 1219 of FIG. 12) may establish a 802.1AS-based time synchronization.

At block 1004, the device may enable a transfer of the 802.1AS follow up information within the 802.11az trigger-based FTM procedure.

It is understood that the above descriptions are for purposes of illustration and are not meant to be limiting.

FIG. 11 shows a functional diagram of an exemplary communication station 1100, in accordance with one or more example embodiments of the present disclosure. In one embodiment, FIG. 11 illustrates a functional block diagram of a communication station that may be suitable for use as an AP 102 (FIG. 1) or a user device 120 (FIG. 1) in accordance with some embodiments. The communication station 1100 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 1100 may include communications circuitry 1102 and a transceiver 1110 for transmitting and receiving signals to and from other communication stations using one or more antennas 1101. The communications circuitry 1102 may include circuitry that can operate the physical layer (PHY) communications and/or medium access control (MAC) communications for controlling access to the wireless medium, and/or any other communications layers for transmitting and receiving signals. The communication station 1100 may also include processing circuitry 1106 and memory 1108 arranged to perform the operations described herein. In some embodiments, the communications circuitry 1102 and the processing circuitry 1106 may be configured to perform operations detailed in the above figures, diagrams, and flows.

In accordance with some embodiments, the communications circuitry 1102 may be arranged to contend for a wireless medium and configure frames or packets for communicating over the wireless medium. The communications circuitry 1102 may be arranged to transmit and receive signals. The communications circuitry 1102 may also include circuitry for modulation/demodulation, upconversion/downconversion, filtering, amplification, etc. In some embodiments, the processing circuitry 1106 of the communication station 1100 may include one or more processors. In other embodiments, two or more antennas 1101 may be coupled to the communications circuitry 1102 arranged for sending and receiving signals. The memory 1108 may store information for configuring the processing circuitry 1106 to perform operations for configuring and transmitting message frames and performing the various operations described herein. The memory 1108 may include any type of memory, including non-transitory memory, for storing information in a form readable by a machine (e.g., a computer). For example, the memory 1108 may include a computer-readable storage device, read-only memory (ROM), random-access memory (RAM), magnetic disk storage media, optical storage media, flash-memory devices and other storage devices and media.

In some embodiments, the communication station 1100 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 1100 may include one or more antennas 1101. The antennas 1101 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 1100 may include one or more of a keyboard, a display, a non-volatile memory port, multiple antennas, a graphics processor, an application processor, speakers, and other mobile device elements. The display may be an LCD screen including a touch screen.

Although the communication station 1100 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 1100 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 1100 may include one or more processors and may be configured with instructions stored on a computer-readable storage device.

FIG. 12 illustrates a block diagram of an example of a machine 1200 or system upon which any one or more of the techniques (e.g., methodologies) discussed herein may be performed. In other embodiments, the machine 1200 may operate as a standalone device or may be connected (e.g., networked) to other machines. In a networked deployment, the machine 1200 may operate in the capacity of a server machine, a client machine, or both in server-client network environments. In an example, the machine 1200 may act as a peer machine in peer-to-peer (P2P) (or other distributed) network environments. The machine 1200 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 1200 may include a hardware processor 1202 (e.g., a central processing unit (CPU), a graphics processing unit (GPU), a hardware processor core, or any combination thereof), a main memory 1204 and a static memory 1206, some or all of which may communicate with each other via an interlink (e.g., bus) 1208. The machine 1200 may further include a power management device 1232, a graphics display device 1210, an alphanumeric input device 1212 (e.g., a keyboard), and a user interface (UI) navigation device 1214 (e.g., a mouse). In an example, the graphics display device 1210, alphanumeric input device 1212, and UI navigation device 1214 may be a touch screen display. The machine 1200 may additionally include a storage device (i.e., drive unit) 1216, a signal generation device 1218 (e.g., a speaker), an enhanced FTM protocol device 1219, a network interface device/transceiver 1220 coupled to antenna(s) 1230, and one or more sensors 1228, such as a global positioning system (GPS) sensor, a compass, an accelerometer, or other sensor. The machine 1200 may include an output controller 1234, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 1202 for generation and processing of the baseband signals and for controlling operations of the main memory 1204, the storage device 1216, and/or the enhanced FTM protocol device 1219. The baseband processor may be provided on a single radio card, a single chip, or an integrated circuit (IC).

The storage device 1216 may include a machine readable medium 1222 on which is stored one or more sets of data structures or instructions 1224 (e.g., software) embodying or utilized by any one or more of the techniques or functions described herein. The instructions 1224 may also reside, completely or at least partially, within the main memory 1204, within the static memory 1206, or within the hardware processor 1202 during execution thereof by the machine 1200. In an example, one or any combination of the hardware processor 1202, the main memory 1204, the static memory 1206, or the storage device 1216 may constitute machine-readable media.

The enhanced FTM protocol device 1219 may carry out or perform any of the operations and processes (e.g., process 1000) described and shown above.

It is understood that the above are only a subset of what the enhanced FTM protocol device 1219 may be configured to perform and that other functions included throughout this disclosure may also be performed by the enhanced FTM protocol device 1219.

While the machine-readable medium 1222 is illustrated as a single medium, the term "machine-readable medium" may include a single medium or multiple media (e.g., a centralized or distributed database, and/or associated caches and servers) configured to store the one or more instructions 1224.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 1200 and that cause the machine 1200 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 1224 may further be transmitted or received over a communications network 1226 using a transmission medium via the network interface device/transceiver 1220 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 1220 may include one or more physical jacks (e.g., Ethernet, coaxial, or phone jacks) or one or more antennas to connect to the communications network 1226. In an example, the network interface device/transceiver 1220 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 1200 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

FIG. 13 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 1304a-b, radio IC circuitry 1306a-b and baseband processing circuitry 1308a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 1304a-b may include a WLAN or Wi-Fi FEM circuitry 1304a and a Bluetooth (BT) FEM circuitry 1304b. The WLAN FEM circuitry 1304a may include a receive signal path comprising circuitry configured to operate on WLAN RF signals received from one or more antennas 1301, to amplify the received signals and to provide the amplified versions of the received signals to the WLAN radio IC circuitry 1306a for further processing. The BT FEM circuitry 1304b may include a receive signal path which may include circuitry configured to operate on BT RF signals received from one or more antennas 1301, to amplify the received signals and to provide the amplified versions of the received signals to the BT radio IC circuitry 1306b for further processing. FEM circuitry 1304a may also include a transmit signal path which may include circuitry configured to amplify WLAN signals provided by the radio IC circuitry 1306a for wireless transmission by one or more of the antennas 1301. In addition, FEM circuitry 1304b may also include a transmit signal path which may include circuitry configured to amplify BT signals provided by the radio IC circuitry 1306b for wireless transmission by the one or more antennas. In the embodiment of FIG. 13, although FEM 1304a and FEM 1304b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 1306a-b as shown may include WLAN radio IC circuitry 1306a and BT radio IC circuitry 1306b. The WLAN radio IC circuitry 1306a may include a receive signal path which may include circuitry to down-convert WLAN RF signals received from the FEM circuitry 1304a and provide baseband signals to WLAN baseband processing circuitry 1308a. BT radio IC circuitry 1306b may in turn include a receive signal path which may include circuitry to down-convert BT RF signals received from the FEM circuitry 1304b and provide baseband signals to BT baseband processing circuitry 1308b. WLAN radio IC circuitry 1306a may also include a transmit signal path which may include circuitry to up-convert WLAN baseband signals provided by the WLAN baseband processing circuitry 1308a and provide WLAN RF output signals to the FEM circuitry 1304a for subsequent wireless transmission by the one or more antennas 1301. BT radio IC circuitry 1306b may also include a transmit signal path which may include circuitry to up-convert BT baseband signals provided by the BT baseband processing circuitry 1308b and provide BT RF output signals to the FEM circuitry 1304b for subsequent wireless transmission by the one or more antennas 1301. In the embodiment of FIG. 13, although radio IC circuitries 1306a and 1306b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 1308a-b may include a WLAN baseband processing circuitry 1308a and a BT baseband processing circuitry 1308b. The WLAN baseband processing circuitry 1308a may include a memory, such as, for example, a set of RAM arrays in a Fast Fourier Transform or Inverse Fast Fourier Transform block (not shown) of the WLAN baseband processing circuitry 1308a. Each of the WLAN baseband circuitry 1308a and the BT baseband circuitry 1308b may further include one or more processors and control logic to process the signals received from the corresponding WLAN or BT receive signal path of the radio IC circuitry 1306a-b, and to also generate corresponding WLAN or BT baseband signals for the transmit signal path of the radio IC circuitry 1306a-b. Each of the baseband processing circuitries 1308a and 1308b may further include physical layer (PHY) and medium access control layer (MAC) circuitry, and may further interface with a device for generation and processing of the baseband signals and for controlling operations of the radio IC circuitry 1306a-b.

Referring still to FIG. 13, according to the shown embodiment, WLAN-BT coexistence circuitry 1313 may include logic providing an interface between the WLAN baseband circuitry 1308a and the BT baseband circuitry 1308b to enable use cases requiring WLAN and BT coexistence. In addition, a switch 1303 may be provided between the WLAN FEM circuitry 1304a and the BT FEM circuitry 1304b to allow switching between the WLAN and BT radios according to application needs. In addition, although the antennas 1301 are depicted as being respectively connected to the WLAN FEM circuitry 1304a and the BT FEM circuitry 1304b, embodiments include within their scope the sharing of one or more antennas as between the WLAN and BT FEMs, or the provision of more than one antenna connected to each of FEM 1304a or 1304b.

In some embodiments, the front-end module circuitry 1304a-b, the radio IC circuitry 1306a-b, and baseband processing circuitry 1308a-b may be provided on a single radio card, such as wireless radio card 1302. In some other embodiments, the one or more antennas 1301, the FEM circuitry 1304a-b and the radio IC circuitry 1306a-b may be provided on a single radio card. In some other embodiments, the radio IC circuitry 1306a-b and the baseband processing circuitry 1308a-b may be provided on a single chip or integrated circuit (IC), such as IC 1312.

In some embodiments, the wireless radio card 1302 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 6, the BT baseband circuitry 1308b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

FIG. 14 illustrates WLAN FEM circuitry 1304a in accordance with some embodiments. Although the example of FIG. 14 is described in conjunction with the WLAN FEM circuitry 1304a, the example of FIG. 14 may be described in conjunction with the example BT FEM circuitry 1304b (FIG. 13), although other circuitry configurations may also be suitable.

In some embodiments, the FEM circuitry 1304a may include a TX/RX switch 1402 to switch between transmit mode and receive mode operation. The FEM circuitry 1304a may include a receive signal path and a transmit signal path. The receive signal path of the FEM circuitry 1304a may include a low-noise amplifier (LNA) 1406 to amplify received RF signals 1403 and provide the amplified received RF signals 1407 as an output (e.g., to the radio IC circuitry 1306a-b (FIG. 13)). The transmit signal path of the circuitry 1304a may include a power amplifier (PA) to amplify input RF signals 1409 (e.g., provided by the radio IC circuitry 1306a-b), and one or more filters 1412, such as band-pass filters (BPFs), low-pass filters (LPFs) or other types of filters, to generate RF signals 1415 for subsequent transmission (e.g., by one or more of the antennas 1301 (FIG. 13)) via an example duplexer 1414.

In some dual-mode embodiments for Wi-Fi communication, the FEM circuitry 1304a may be configured to operate in either the 2.4 GHz frequency spectrum or the 5 GHz frequency spectrum. In these embodiments, the receive signal path of the FEM circuitry 1304a may include a receive signal path duplexer 1404 to separate the signals from each spectrum as well as provide a separate LNA 1406 for each spectrum as shown. In these embodiments, the transmit signal path of the FEM circuitry 1304a may also include a power amplifier 1410 and a filter 1412, such as a BPF, an LPF or another type of filter for each frequency spectrum and a transmit signal path duplexer 1404 to provide the signals of one of the different spectrums onto a single transmit path for subsequent transmission by the one or more of the antennas 1301 (FIG. 13). In some embodiments, BT communications may utilize the 2.4 GHz signal paths and may utilize the same FEM circuitry 1304a as the one used for WLAN communications.

FIG. 15 illustrates radio IC circuitry 1306a in accordance with some embodiments. The radio IC circuitry 1306a is one example of circuitry that may be suitable for use as the WLAN or BT radio IC circuitry 1306a/1306b (FIG. 13), although other circuitry configurations may also be suitable. Alternatively, the example of FIG. 15 may be described in conjunction with the example BT radio IC circuitry 1306b.

In some embodiments, the radio IC circuitry 1306a may include a receive signal path and a transmit signal path. The receive signal path of the radio IC circuitry 1306a may include at least mixer circuitry 1502, such as, for example, down-conversion mixer circuitry, amplifier circuitry 1506 and filter circuitry 1508. The transmit signal path of the radio IC circuitry 1306a may include at least filter circuitry 1512 and mixer circuitry 1514, such as, for example, up-conversion mixer circuitry. Radio IC circuitry 1306a may also include synthesizer circuitry 1504 for synthesizing a frequency 1505 for use by the mixer circuitry 1502 and the mixer circuitry 1514. The mixer circuitry 1502 and/or 1514 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation.

FIG. 15 illustrates only a simplified version of a radio IC circuitry, and may include, although not shown, embodiments where each of the depicted circuitries may include more than one component. For instance, mixer circuitry 1514 may each include one or more mixers, and filter circuitries 1508 and/or 1512 may each include one or more filters, such as one or more BPFs and/or LPFs according to application needs. For example, when mixer circuitries are of the direct-conversion type, they may each include two or more mixers.

In some embodiments, mixer circuitry 1502 may be configured to down-convert RF signals 1407 received from the FEM circuitry 1304a-b (FIG. 13) based on the synthesized frequency 1505 provided by synthesizer circuitry 1504. The amplifier circuitry 1506 may be configured to amplify the down-converted signals and the filter circuitry 1508 may include an LPF configured to remove unwanted signals from the down-converted signals to generate output baseband signals 1507. Output baseband signals 1507 may be provided to the baseband processing circuitry 1308a-b (FIG. 13) for further processing. In some embodiments, the output baseband signals 1507 may be zero-frequency baseband signals, although this is not a requirement. In some embodiments, mixer circuitry 1502 may comprise passive mixers, although the scope of the embodiments is not limited in this respect.

In some embodiments, the mixer circuitry 1514 may be configured to up-convert input baseband signals 1511 based on the synthesized frequency 1505 provided by the synthesizer circuitry 1504 to generate RF output signals 1409 for the FEM circuitry 1304a-b. The baseband signals 1511 may be provided by the baseband processing circuitry 1308a-b and may be filtered by filter circuitry 1512. The filter circuitry 1512 may include an LPF or a BPF, although the scope of the embodiments is not limited in this respect.

In some embodiments, the mixer circuitry 1502 and the mixer circuitry 1514 may each include two or more mixers and may be arranged for quadrature down-conversion and/or up-conversion respectively with the help of synthesizer 1504. In some embodiments, the mixer circuitry 1502 and the mixer circuitry 1514 may each include two or more mixers each configured for image rejection (e.g., Hartley image rejection). In some embodiments, the mixer circuitry 1502 and the mixer circuitry 1514 may be arranged for direct down-conversion and/or direct up-conversion, respectively. In some embodiments, the mixer circuitry 1502 and the mixer circuitry 1514 may be configured for super-heterodyne operation, although this is not a requirement.

Mixer circuitry 1502 may comprise, according to one embodiment: quadrature passive mixers (e.g., for the in-phase (I) and quadrature phase (Q) paths). In such an embodiment, RF input signal 1407 from FIG. 15 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 1505 of synthesizer 1504 (FIG. 15). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 1407 (FIG. 14) may comprise a balanced signal, although the scope of the embodiments is not limited in this respect. The I and Q baseband output signals may be provided to low-noise amplifier, such as amplifier circuitry 1506 (FIG. 15) or to filter circuitry 1508 (FIG. 15).

In some embodiments, the output baseband signals 1507 and the input baseband signals 1511 may be analog baseband signals, although the scope of the embodiments is not limited in this respect. In some alternate embodiments, the output baseband signals 1507 and the input baseband signals 1511 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 1504 may be a fractional-N synthesizer or a fractional N/N+1 synthesizer, although the scope of the embodiments is not limited in this respect as other types of frequency synthesizers may be suitable. For example, synthesizer circuitry 1504 may be a delta-sigma synthesizer, a frequency multiplier, or a synthesizer comprising a phase-locked loop with a frequency divider. According to some embodiments, the synthesizer circuitry 1504 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 1504 may be provided by a voltage controlled oscillator (VCO), although that is not a requirement. A divider control input may further be provided by either the baseband processing circuitry 1308a-b (FIG. 13) depending on the desired output frequency 1505. In some embodiments, a divider control input (e.g., N) may be determined from a look-up table (e.g., within a Wi-Fi card) based on a channel number and a channel center frequency as determined or indicated by the example application processor 1310. The application processor 1310 may include, or otherwise be connected to, one of the example secure signal converter 101 or the example received signal converter 103 (e.g., depending on which device the example radio architecture is implemented in).

In some embodiments, synthesizer circuitry 1504 may be configured to generate a carrier frequency as the output frequency 1505, while in other embodiments, the output frequency 1505 may be a fraction of the carrier frequency (e.g., one-half the carrier frequency, one-third the carrier frequency). In some embodiments, the output frequency 1505 may be a LO frequency (fLO).

FIG. 16 illustrates a functional block diagram of baseband processing circuitry 1308a in accordance with some embodiments. The baseband processing circuitry 1308a is one example of circuitry that may be suitable for use as the baseband processing circuitry 1308a (FIG. 13), although other circuitry configurations may also be suitable. Alternatively, the example of FIG. 15 may be used to implement the example BT baseband processing circuitry 1308b of FIG. 13.

The baseband processing circuitry 1308a may include a receive baseband processor (RX BBP) 1602 for processing receive baseband signals 1509 provided by the radio IC circuitry 1306a-b (FIG. 13) and a transmit baseband processor (TX BBP) 1604 for generating transmit baseband signals 1511 for the radio IC circuitry 1306a-b. The baseband processing circuitry 1308a may also include control logic 1606 for coordinating the operations of the baseband processing circuitry 1308a.

In some embodiments (e.g., when analog baseband signals are exchanged between the baseband processing circuitry 1308a-b and the radio IC circuitry 1306a-b), the baseband processing circuitry 1308a may include ADC 1610 to convert analog baseband signals 1609 received from the radio IC circuitry 1306a-b to digital baseband signals for processing by the RX BBP 1602. In these embodiments, the baseband processing circuitry 1308a may also include DAC 1612 to convert digital baseband signals from the TX BBP 1604 to analog baseband signals 1611.

In some embodiments that communicate OFDM signals or OFDMA signals, such as through baseband processor 1308a, the transmit baseband processor 1604 may be configured to generate OFDM or OFDMA signals as appropriate for transmission by performing an inverse fast Fourier transform (IFFT). The receive baseband processor 1602 may be configured to process received OFDM signals or OFDMA signals by performing an FFT. In some embodiments, the receive baseband processor 1602 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 13, in some embodiments, the antennas 1301 (FIG. 13) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 1301 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments.

Example 1 may include a device comprising processing circuitry coupled to storage, the processing circuitry configured to: establish a 802. 1AS-based time synchronization; and enable a transfer of the 802.1AS follow up information within the 802.11az trigger-based FTM procedure.

Example 2 may include the device of example 1 and/or some other example herein, wherein the processing circuitry may be further configured to include an extension to the 802.11az a Location Measurement Report (LMR) report frame.

Example 3 may include the device of example 1 and/or some other example herein, wherein the extension carries the 802.1AS follow-up information.

Example 4 may include the device of example 1 and/or some other example herein, further comprising a transceiver configured to transmit and receive wireless signals.

Example 5 may include the device of example 4 and/or some other example herein, further comprising an antenna coupled to the transceiver to cause to send the frame.

Example 6 may include a non-transitory computer-readable medium storing computer-executable instructions which when executed by one or more processors result in performing operations comprising: establishing a 802.1AS-based time synchronization; and enabling a transfer of the 802.1AS follow up information within the 802.11az trigger-based FTM procedure.

Example 7 may include the non-transitory computer-readable medium of example 6 and/or some other example herein, wherein the operations further comprise including an extension to the 802.11az a Location Measurement Report (LMR) report frame.

Example 8 may include the non-transitory computer-readable medium of example 6 and/or some other example herein, wherein the extension carries the 802.1AS follow-up information.

Example 9 may include a method comprising: establishing, by one or more processors, a 802.1AS-based time synchronization; and enabling a transfer of the 802.1AS follow up information within the 802.11az trigger-based FTM procedure.

Example 10 may include the method of example 9 and/or some other example herein, further comprising including an extension to the 802.11az a Location Measurement Report (LMR) report frame.

Example 11 may include the method of example 9 and/or some other example herein, wherein the extension carries the 802.1AS follow-up information.

Example 12 may include an apparatus comprising means for: establishing a 802.1AS-based time synchronization; and enabling a transfer of the 802.1AS follow up information within the 802.11az trigger-based FTM procedure.

Example 13 may include the apparatus of example 12 and/or some other example herein, further comprising including an extension to the 802.11az a Location Measurement Report (LMR) report frame.

Example 14 may include the apparatus of example 12 and/or some other example herein, wherein the extension carries the 802.1AS follow-up information.

Example 15 may include one or more non-transitory computer-readable media comprising instructions to cause an electronic device, upon execution of the instructions by one or more processors of the electronic device, to perform one or more elements of a method described in or related to any of examples 1-14, or any other method or process described herein.

Example 16 may include an apparatus comprising logic, modules, and/or circuitry to perform one or more elements of a method described in or related to any of examples 1-14, or any other method or process described herein.

Example 17 may include a method, technique, or process as described in or related to any of examples 1-14, or portions or parts thereof.

Example 18 may include an apparatus comprising: one or more processors and one or more computer readable media comprising instructions that, when executed by the one or more processors, cause the one or more processors to perform the method, techniques, or process as described in or related to any of examples 1-14, or portions thereof.

Example 19 may include a method of communicating in a wireless network as shown and described herein.

Example 20 may include a system for providing wireless communication as shown and described herein.

Example 21 may include a device for providing wireless communication as shown and described herein.

In example 22, the subject matter includes a device, the device including processing circuitry coupled to storage, the processing circuitry configured to: establish an IEEE 801.1AS-based time synchronization; and enable a transfer of an 801.1AS follow up information of the established IEEE 801.1AS-based time synchronization within an IEEE 801.11az trigger-based fine timing measurement, FTM, procedure.

In example 23, the subject matter of example 22, can optionally include that the processing circuitry is further configured to include the 801.1AS follow up information to a Location Measurement Report, LMR, report frame of the IEEE 801.11az trigger-based FTM procedure.

In example 24, the subject matter of example 22 or example 23, can optionally include that the 801.1AS follow up information includes information representative of an accumulated time offset for the IEEE 801.1AS-based time synchronization and passed down from an IEEE 801.1AS layer of the IEEE 801.1AS-based time synchronization.

In example 25, the subject matter of any one of examples 22 to 24, can optionally include that the IEEE 801.11az trigger-based FTM procedure includes a trigger based FTM negotiation, and can optionally include that the processing circuitry is further configured to cause the device to indicate the presence of the 801.1AS follow up information and a purpose of an FTM session establishment being time sensitive network ,TSN.

In example 26, the subject matter of any one of examples 22 to 25, can optionally include that the processing circuitry is configured to generate an FTM request for the IEEE 801.11az trigger-based FTM procedure, the FTM request may include a ranging parameters element may include a status indication field representative of that the FTM session is for the purpose of TSN.

In example 27, the subject matter of example 26, can optionally include that the status indication field includes at least one of a first value representative of range or proximity measurement, a second value representative of time synchronization, and a third value representative of simultaneous range and time synchronization.

In example 28, the subject matter of example 26 or example 27, can optionally include that the processing circuitry is configured to decode an FTM response frame in response to a transmission of the FTM request, can optionally include that the FTM response frame includes a request type or status indication field representative of a measurement result.

In example 29, the subject matter of any one of examples 22 to 28, can optionally include that the initiation of the IEEE 801.11az trigger based FTM procedure is aligned with a sync interval of the established IEEE 801.1AS-based time synchronization.

In example 30, the subject matter of any one of examples 22 to 29, can optionally include that the IEEE 801.11az trigger based FTM procedure includes a polling phase, a measurement sounding phase, and a measurement reporting phase, and can optionally include that timestamps required for the established IEEE 801.1AS-based time synchronization are obtained during the measurement sounding phase.

In example 31, the subject matter of any one of examples 22 to 30, can optionally include that the LMR includes VendorSpecific information element of the established IEEE 801.1AS-based time synchronization.

In example 32, the subject matter includes an apparatus of an IEEE 801.11 station device, STA, which may include: the subject matter of any one examples 22 to 31; and a radio frequency, RF, interface.

In example 33, the apparatus of example 32, further may include a transceiver configured to transmit and receive wireless signals.

In example 34, the apparatus of example 33, further may include an antenna coupled to the transceiver to cause to send the frame.

In example 35, the subject matter includes a method that may include: establishing an IEEE 801.1AS-based time synchronization; and enabling a transfer of an 801.1AS follow up information of the established IEEE 801.1AS-based time synchronization within an IEEE 801.11az trigger-based fine timing measurement, FTM, procedure.

In example 36, the subject matter of example 35, can optionally include including the 801.1AS follow up information to a Location Measurement Report, LMR, report frame of the IEEE 801.11az trigger-based FTM procedure.

In example 37, the subject matter of example 35 or example 36, can optionally include including information representative of an accumulated time offset for the IEEE 801.1AS-based time synchronization and passed down from an IEEE 801.1AS layer of the IEEE 801.1AS-based time synchronization.

In example 38, the subject matter of any one of examples 35 to 37, can optionally include that the IEEE 801.11az trigger-based FTM procedure includes a trigger based FTM negotiation, and can optionally include causing the device to indicate the presence of the 801.1AS follow up information and a purpose of an FTM session establishment being time sensitive network TSN.

In example 39, the subject matter of any one of examples 35 to 38, can optionally include generating an FTM request for the IEEE 801.11az trigger-based FTM procedure, the FTM request may include a ranging parameters element may include a status indication field representative of that the FTM session is for the purpose of TSN.

In example 40, the subject matter of example 39, can optionally include that the status indication field includes at least one of a first value representative of range or proximity measurement, a second value representative of time synchronization, and a third value representative of simultaneous range and time synchronization.

In example 41, the subject matter of example 39 or example 40, can optionally include decoding an FTM response frame in response to a transmission of the FTM request, can optionally include that the FTM response frame includes a request type or status indication field representative of a measurement result.

In example 42, the subject matter of any one of examples 35 to 41, can optionally include that the initiation of the IEEE 801.11az trigger based FTM procedure is aligned with a sync interval of the established IEEE 801.1AS-based time synchronization.

In example 43, the subject matter of any one of examples 45 to 42, can optionally include that the IEEE 801.11az trigger based FTM procedure includes a polling phase, a measurement sounding phase, and a measurement reporting phase, and can optionally include that timestamps required for the established IEEE 801.1AS-based time synchronization are obtained during the measurement sounding phase.

In example 44, the subject matter of any one of examples 35 to 43, can optionally include that the LMR includes VendorSpecific information element of the established IEEE 801.1AS-based time synchronization.

In example 45, a non-transitory computer-readable medium storing computer-executable instructions which when executed by one or more processors result in performing any one of the methods of examples 35 to 44.

Fine Timing Measurement (FTM) may refer to a procedure that may allow a STA to determine its distance from another STA. FTM may allow a STA to measure the round trip time (RTT) between the STA and another STA. With the regular transfer of FTM frames it is possible for the recipient STA to track changes in its relative location with other STAs in the environment. In some aspects, a STA may perform the procedure with multiple STAs, of which their locations are known, in order to obtain its location. In some further aspects, the FTM procedure may allow a STA to determine its range, relative range and its direction to or from another STA using Time of Flight (TOF) time difference of arrival and phase measurement.

In an instance of an FTM procedure between an initiating STA (ISTA) and a responding STA (RSTA) along with the associated scheduling and operational parameters of that instance (i.e. parameters of a Fine Timing Measurement Parameters element), which may be referred to as an FTM session. The FTM session may include a negotiation, measurement exchange and termination. A STA may have multiple concurrent FTM sessions, which the concurrent FTM sessions may occur with RSTAs that are members of different BSSs and different ESSs, or outside of a BSS, each session using its own scheduling, channel and operational parameters.

A STA might have multiple concurrent FTM sessions. Concurrent FTM sessions might occur with responding STAs that are members of different basic service sets (BSSs) and possibly different extended service sets (ESSs), or possibly outside of a BSS, each session using its own scheduling, channel and operational parameters.

With respect to the measurement exchange of the FTM procedure, in some aspects, the ISTA may indicate, during each burst instance, its availability by transmitting an FTM request frame. During each burst instance the RSTA may transmit one or more FTM frames as negotiated. The time windows during which time of departure (TOD) measurement for the transmission of the FTM frame and the time of arrival (TOA) measurement on the receipt of acknowledgment corresponding to the transmitted FTM frame are performed may be referred to as burst instances.

In an FTM procedure supporting 802.1AS time synchronization as exemplary depicted in FIG. 3, t1 denotes time of departure (TOD) of fine timing measurement frame from the sender STA, t2 denotes time of arrival (TOA) of the fine timing measurement frame to a receiving STA, t3 denotes TOD of an acknowledgment (ACK) at the receiving STA, and t4 denotes TOA of the ACK at the sender STA.

In the 802.11az FTM procedure as illustrated in FIG 4, within an availability window, the RSTA and ISTA may perform polling, measurement sounding, or measurement reporting, signaling of modification of availability window parameters and TB ranging session termination. Timestamps may be reported within each measurement sounding phase. In TB measurement operation mode, measurements may be exchanged between multiple ISTAs and a RSTA at the same time.

In line with FIG. 5, both RSTA and ISTA perform measurements. The measurements are made by capturing timestamps of the NDP. The ISTA#1 may record the time at which the I2R NDP is transmitted as t1 (i.e. t1_1=TOD (I2R NDP)). The RSTA may capture the time at which the I2R NDP sent by the ISTA#1 arrives at the RSTA (i.e. t2_1=TOA(I2R NDP)). If the measurement sounding included more than a single TF ranging sounding frame as depicted in FIG. 5, each ISTA and RSTA pair shall refer to the t1 and t2 of the I2R NDP transmitted by the respective ISTA. In this illustration, ISTA#2 may record the time at which the I2R NDP is transmitted as t1 (i.e. t1_2=TOD (I2R NDP)). The RSTA may capture the time at which the I2R NDP sent by ISTA#2 arrives at the RSTA (i.e. t2_2=TOA(I2R NDP)). Furthermore, t3 (t3=TOD(R2I NDP)) and t4 (t4_1=TOA (R2I NDP) for ISTA#1 and t4_2=TOA (R2I NDP) for ISTA#2)) may be based on single R2I NDP received by all ISTAs.

In some further aspects, LMR may refer to a location measurement report. As depicted in FIGs. 6 and 7, and LMR frame includes a category field (a first octet) corresponding to the action field of the frame, a second octet for a public action field (i.e. LMR has a field value of 47), a third octet for a dialog token field, a TOD field and a TOA field both expressed in picoseconds for representing the respective time for TODs and TOA of corresponding NDPs, a TOD error field and a TOA error field, a center frequency offset (CFO) parameter field, an R2I (RSTA to ISTA) NDP Tx Power field, and I2R (ISTA to RSTA) NDP Target RSSI field, and optional secure HE-LTF parameters field and AOA (Angle of Arrival) Feedback fields. In some aspects provided herein, the LMR may further include an optional information element field (802.1AS VendorSpecific IE 701).

As described, the 802.1AS VendorSpecific IE can include preciseOriginTimestamp, rateRatio, correctionField, and other fields of the Follow-Up message defined in 802.1AS. The Element ID may be assigned to have value 221, and the length field may be set to 80. The OUI or CID field may be set to 00-80-C2. As indicated, the type field is set to 0.

The preciseOriginTimestamp is the sourceTime of the ClockMaster entity of the Grandmaster IEEE 1588 precision time protocol (PTP) Instance, with any fractional nanoseconds truncated, when the received time-synchronization information was sent by the Grandmaster PTP instance. The rateRatio is the value of the rateRatio member of the most recently received PortSyncSync structure from the PortSync entity of this PTP Port. It is equal to the ratio of the frequency of the Grandmaster Clock to the frequency of the LocalClock entity of this PTP Instance. The followUpCorrectionField contains the accumulated time since the preciseOriginTimestamp was captured by the Grandmaster PTP Instance. This is equal to the elapsed time, relative to the Grandmaster Clock, between the time the Grandmaster PTP Instance sent the received time-synchronization event message, truncated to the nearest nanosecond, and the time at which that event message was sent by the upstream PTP Instance. The followUpCorrectionField is equal to the value of the followUpCorrectionField member of the most recently received PortSyncSync structure from the PortSync entity of this PTP Port.

In an FTM negotiation, in order to initiate an FTM procedure, the ISTA may transmit an FTM request frame. After transmission of the FTM request frame (which may be an initial FTM request frame), the ISTA may be ready to receive a Fine Timing Measurement frame (FTM frame). An RSTA may not transmit FTM frames addressed to a peer STA unless the RSTA has received an initial FTM request frame from the peer STA. In some aspects, the initial FTM request frame may have a trigger field set to 1 and a set of scheduling parameters in an FTM Parameters element describing the ISTA's availability for measurement exchange. The first FTM frame in the FTM session may be called the initial FTM frame. The RSTA may transmit an initial FTM frame within 10 ms in response to a received initial FTM request frame.

As illustrated in FIG. 8, in a 802.11az FTM operation, t1 and t3 correspond to the point in time at which the transmitted HE TB Ranging NDP and/or HE Ranging NDP appears at the transmit antenna connector, and t2 and t4 correspond to the point in time at which the incoming HE TB Ranging NDP and/or HE Ranging NDP arrives at the receive antenna connector.

In more detail, for some aspects an FTM Request frame may include a first octet for a category field corresponding to the action field of the frame, a second octet for a public action field (i.e. FTM request has a field value of 32), a third octet for a trigger field (with a value of 1) indicating that the ISTA requests that the RSTA start or continue sending FTM frames, while the trigger field set to 0 indicates that ISTA requests that the RSTA stop sending FTM frames, an optional LCI Measurement request field (of a variable size), an optional Civic Measurement Request field (of a variable size), and an optional FTM Parameters field (c.f. FTM Parameters element).. In some further aspects, an FTM request frame (e.g. initial FTM request frame) and/or an FTM frame (e.g. initial FTM frame) may include a ranging parameters element. The ranging parameters element may include an element ID field, a length field, an element ID extension field and the ranging parameters as exemplarily described in this disclosure.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. A device comprising processing circuitry coupled to storage, the processing circuitry configured to:
establish an IEEE 802.1AS-based time synchronization; and
enable a transfer of an 802.1AS follow up information of the established IEEE 802.1AS-based time synchronization within an IEEE 802.11az trigger-based fine timing measurement, FTM, procedure.

2. The device of claim 1, wherein the processing circuitry is further configured to include the 802.1AS follow up information to a Location Measurement Report, LMR, report frame of the IEEE 802.11az trigger-based FTM procedure.

3. The device of claim 1 or claim 2, wherein the 802.1AS follow up information comprises information representative of an accumulated time offset for the IEEE 802. 1AS-based time synchronization and passed down from an IEEE 802.1AS layer of the IEEE 802.1AS-based time synchronization.

4. The device of any one of claims 1 to 3, wherein the IEEE 802.11az trigger-based FTM procedure comprises a trigger based FTM negotiation, and wherein the processing circuitry is further configured to cause the device to indicate a presence of the 802.1AS follow up information and a purpose of an FTM session establishment being time sensitive network, TSN.

5. The device of any one of claims 1 to 4, wherein the processing circuitry is configured to generate an FTM request for the IEEE 802.11az trigger-based FTM procedure, the FTM request comprising a ranging parameters element comprising a status indication field representative of that an FTM session is for the purpose of TSN.

6. The device of claim 5, wherein the status indication field comprises at least one of a first value representative of range or proximity measurement, a second value representative of time synchronization, and a third value representative of simultaneous range and time synchronization.

7. The device of claim 5 or claim 6, wherein the processing circuitry is configured to decode an FTM response frame in response to a transmission of the FTM request, wherein the FTM response frame comprises a request type or a status indication field representative of a measurement result.

8. The device of any one of claims 1 to 7, wherein an initiation of the IEEE 802.11az trigger based FTM procedure is aligned with a sync interval of the established IEEE 802.1AS-based time synchronization.

9. The device of any one of claims 1 to 8, wherein the IEEE 802.11az trigger based FTM procedure comprises a polling phase, a measurement sounding phase, and a measurement reporting phase, and wherein timestamps required for the established IEEE 802.1AS-based time synchronization are obtained during the measurement sounding phase.

10. The device of any one of claims 1 to 9, wherein the LMR comprises VendorSpecific information element of the established IEEE 802.1AS-based time synchronization.

11. An apparatus of an IEEE 802.11 station device, STA, comprising:
the device of any one claims 1 to 10; and
a radio frequency, RF, interface.

12. The apparatus of claim 11, further comprising a transceiver configured to transmit and receive wireless signals.

13. The apparatus of claim 12, further comprising an antenna coupled to the transceiver to cause to send a frame.

14. A method comprising:
establishing an IEEE 802.1AS-based time synchronization; and
enabling a transfer of an 802.1AS follow up information of the established IEEE 802.1AS-based time synchronization within an IEEE 802.11az trigger-based fine timing measurement, FTM, procedure.

15. A non-transitory computer-readable medium storing computer-executable instructions which when executed by one or more processors result in performing the method of claim 14.
